# EUROPEAN PATENT SPECIFICATION

(11) **EP 2 660 075 B1**
(45) Date of publication and mention of the grant of the patent: **02.09.2015**
(21) Application number: 11853082.3
(22) Date of filing: 27.12.2011
(51) Int. Cl.: B60C 5/00, B60C 19/00, B29D 30/00

(54) **PNEUMATIC TIRE**
LUFTREIFEN
PNEUMATIQUE

(30) Priority: 28.12.2010 WO PCT/JP2010/073754
(43) Date of publication of application: 06.11.2013
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: GREVERIE, Ludovic, Ota-shi Gunma 373-8668 (JP); PARFONDRY, Alain, Clermont-Ferrand, Cedex 9 63040 (FR); DELFINO, Antonio, Clermont-Ferrand, Cedex 9 63040 (FR); FOMBELLE, Damien, Clermon-Ferrand, Cedex 9 63040 (FR)
(74) Representative: Diernaz, Christian
(86) International application number: PCT/JP2011/080334
(87) International publication number: WO 2012/091065

(56) References cited:
- EP-A1- 1 659 004
- WO-A1-2006/013874
- WO-A1-2006/013874
- JP-A- 2010 000 947
- JP-A- 2010 280 340

## Description

### Technical Field

The present invention relates to a pneumatic tyre, and specifically the invention relates to a pneumatic tyre provided with a noise damper for suppressing cavity resonance produced in a tyre cavity.

### Prior Art

Resonant vibration (cavity resonance) in a tyre cavity is generated by the vibration of air enclosed in the tyre cavity. The air in the tyre cavity is generally excited by deformation of the tyre tread part and sidewall part as the tyre travels, and air enclosed in the annular cavity acts as an air column when this air is excited.

Sound waves which are excited in the tyre cavity are transmitted inside the vehicle compartment as a solid-borne sound which spreads through the wheels, suspension and motor vehicle body, and is felt by vehicle passengers as disagreeable low-frequency noise.

Introducing a noise damper into the tyre cavity is known as an effective means for reducing the cavity resonance, and figure 1 of Patent Document 1 shows technology in which a sponge noise damper having a trapezoidal shape is fixed to an internal surface of a tyre in such a way as to extend in the direction of rotation of the tyre, whereby cavity resonance is reduced.

Furthermore, figure 1 of Patent Document 2 shows technology in which a sponge noise damper comprising two essentially trapezoidal shapes so as to be provided with a trough part in the middle is fixed to an internal surface of a tyre in such a way as to extend in the direction of rotation of the tyre, whereby cavity resonance is reduced.

In addition, figure 1 of Patent Document 3 shows technology in which a plurality of independent ribbon-shaped noise dampers are fixed to an internal surface of a tyre in such a way as to extend in the direction of rotation of the tyre, which achieves both a reduction in cavity resonance and high-speed durability.

### Prior Art Documents

### Patent Documents

Patent Document 1: WO2003/103989
Patent Document 2: JP2007-161069A
Patent Document 3: JP2005-262920A

EP 1659004 A1 discloses a tire provided with a noise damping element having the features of the preamble of the main claim. WO2006/013874A1 discloses a noise damping element inside a tire cavity.

### Summary of the Invention

### Problem to be Solved by the Invention

However, the material which is generally used for the noise damper has low thermal conductivity, so there is a problem with the technology described in Patent Documents 1 and 2 in that the high-speed durability of the tyre is reduced when the noise damper covers a wide range of the order of 40% of the tyre internal surface in order to reduce cavity resonance.

Furthermore, there is a problem with the technology described in Patent Document 3 in that the process to fit the noise dampers to the tyre internal surface is complex because multiple noise dampers have to be introduced, so the producibility of this kind of tyre is reduced.

In addition, in recent years there has been a demand for pneumatic tyres which can further reduce cavity resonance in order to further reduce disagreeable low-frequency noise which is transmitted to vehicle passengers.

The present invention has therefore been devised in order to resolve the abovementioned problems of the prior art, and the aim thereof lies in providing a pneumatic tyre provided with a noise damper in the tyre cavity, which can maintain high-speed durability and producibility while also reducing cavity resonance.

### Means for Solving the Problem

In order to achieve the abovementioned aim, the present invention provides a pneumatic tyre comprising a tread, a cavity enclosed by a tyre internal surface, and a noise damper for reducing cavity resonance in said cavity, said pneumatic tyre being characterized in that: the noise damper is at least one continuous ribbon which is formed by a predetermined sound-absorbing material and has a width W and thickness E, and a bottom surface affixed to the tyre internal surface over a width Wc, which is fixed to the tyre internal surface in such a way as to cover a range of at least 30% of the inside of the tyre in the radial direction corresponding to the tread on the tyre internal surface; the at least one continuous ribbon is disposed in such a way as to run at least once around the tyre internal surface about the axis of rotation thereof, and in such a way that the start end and terminal end of the at least one continuous ribbon are offset from each other in the direction of the axis of rotation of the tyre, and as a result a continuous groove having a groove width D which is at least 10% of the width W of the at least one continuous ribbon is formed by the adjacent portions of the at least one continuous ribbon and the tyre internal surface; and the width Wc of the bottom surface of the continuous ribbon is smaller than the width W of the continuous ribbon.

According to the present invention having the abovementioned construction, the start end and terminal end of the at least one continuous ribbon are disposed in such a way as to be offset from each other in the axial direction, so a continuous ribbon such as this is disposed in such a way as to extend along a predetermined angle with respect to the circumferential direction of the tyre, and it is possible to impede vibration of air which is excited in the tyre cavity and propagates in the circumferential direction of the tyre, and as a result cavity resonance is improved.

In addition, according to the present invention, a continuous groove is formed by the spaces between adjacent continuous ribbons and the tyre internal surface as a result of the continuous ribbon, so vibration of air in the tyre cavity is conducted to the continuous groove, and this continuous groove is formed by a continuous ribbon whereof the start end and terminal end are offset in the axial direction and which runs at least once around the tyre internal surface about the axis of rotation thereof, so the direction in which air vibration is propagated (the circumferential direction of the tyre) is different from the direction in which the continuous ribbon runs, and as a result propagation of air vibration in the tyre cavity is impeded by means of the continuous groove and cavity resonance is improved.

Here, the energy of the air vibration conducted into the continuous groove is divided into a component which permeates into the continuous ribbon and a component which is reflected by the surface of the continuous groove of the continuous ribbon. The energy component which permeates into the continuous ribbon is attenuated by the sound-absorbing effect of the continuous ribbon constituting the noise damper, and the component which is reflected by the surface of the continuous groove of the continuous ribbon is not only attenuated by reflection thereof, the energy thereof also reaches other sections of the continuous ribbon whereby the abovementioned permeation/reflection phenomena are repeated, so cavity resonance can be more effectively improved.

In addition, according to the present invention, the continuous groove is formed by means of the continuous ribbon and the tyre internal surface, and the groove width is at least 10% of the width W of the continuous ribbon, so the area over which the tyre internal surface comes into direct contact with air in the tyre cavity by way of the continuous groove can be made a sufficient area to radiate heat. This means that the heat generated mainly in the tread as the tyre travels can be reliably released into the tyre cavity from the tyre internal surface even though the noise damper is provided, and as a result it is possible to maintain high-speed durability.

In addition, according to the present invention, the width Wc of the bottom surface of the continuous ribbon affixed to the tyre internal surface is smaller than the width W of the continuous ribbon, so the area over which the tyre internal surface comes into direct contact with air in the tyre cavity by way of the continuous groove can be increased. This means that the heat generated mainly in the tread as the tyre travels can be reliably released into the tyre cavity from the tyre internal surface even though the noise damper is provided, and as a result it is possible to maintain high-speed durability.

In addition, with the pneumatic tyre according to the present invention constructed in the above manner, if the continuous ribbon is fixed in the tyre cavity, for example, the start end thereof is fixed to the tyre internal surface, after which the continuous ribbon should continue to be fixed up to the terminal end thereof while the tyre is rotated about the axis of rotation thereof and the continuous ribbon or the tyre itself is moved in the axial direction. In this way, it is possible to attach the continuous ribbon with relative ease, and the producibility of a tyre provided with a noise damper can be maintained.

According to the present invention, the ratio of the width W of the at least one continuous ribbon to the width Wc of the bottom surface (W/Wc) is preferably at least equal to 1.2.

According to the present invention constructed in this way, it is possible to ensure high-speed durability and to maintain producibility while a reduction in cavity resonance can be envisaged. That is to say, if the ratio of the width W of the continuous ribbon to the width Wc of the bottom surface (W/Wc) is less than 1.2, the area over which the tyre internal surface comes into direct contact with air in the tyre cavity by way of the continuous groove is reduced, so there is a reduction in high-speed durability. Accordingly, if the ratio of the width W of the continuous ribbon to the width Wc of the bottom surface (W/Wc) is at least equal to 1.2, it is possible to ensure high-speed durability and to maintain producibility with greater reliability while a reduction in cavity resonance can be envisaged.

According to the present invention, preferably the tread has a width TW, and the width W of the at least one continuous ribbon is between 5% and 25% of the width TW of the tread.

According to the present invention constructed in this way, it is possible to ensure high-speed durability and to maintain producibility while a reduction in cavity resonance can be envisaged. That is to say, if the width W of the continuous ribbon is less than 5% of the tread width TW, the width W of the continuous ribbon is excessively small, and it is necessary to increase the number of turns of the continuous ribbon in order to effectively reduce cavity resonance, and producibility is reduced. On the other hand, if the width W of the continuous ribbon is more than 25% of the tread width TW, the proportion of the tyre internal surface occupied by the continuous ribbon increases, and as a result the proportion of the tyre internal surface which comes into contact with air in the tyre cavity is reduced whereby the high-speed durability is reduced. Accordingly, if the width W of the continuous ribbon is set between 5% and 25% of the tread width TW, it is possible to ensure high-speed durability and to maintain producibility while a reduction in cavity resonance can be envisaged.

According to the present invention, the at least one continuous ribbon is preferably disposed in such a way as to run at least twice around the tyre internal surface.

According to the present invention constructed in this way, the continuous groove which is formed by the continuous ribbon runs at least once around the tyre internal surface, so it is possible to achieve effective attenuation of air vibration, and as a result high-speed durability can be more reliably ensured while a reduction in cavity resonance can be envisaged.

According to the present invention, preferably, there are two of the abovementioned at least one continuous ribbon, and the continuous groove is formed for each of the two continuous ribbons by the continuous ribbons and the tyre internal surface.

According to the present invention constructed in this way, the degree of freedom in positioning the continuous ribbons can be increased, for instance the positions at which the continuous ribbons are fixed to the tyre internal surface can be optimized in order to suppress cavity resonance, so high-speed durability can be more effectively ensured while a reduction in cavity resonance can be envisaged.

According to the present invention, preferably, there are two of the abovementioned at least one continuous ribbon, namely a first continuous ribbon extending in a predetermined angular direction with respect to the circumferential direction of the tyre about the axis of rotation of the tyre, and a second continuous ribbon extending in a direction which is symmetrical, with respect to the circumferential direction of the tyre, to the predetermined angular direction along which the first continuous ribbon runs.

According to the present invention constructed in this way, the degree of freedom in positioning the continuous ribbons can be increased, for instance the positions at which the continuous ribbons are fixed to the tyre internal surface can be optimized in order to suppress cavity resonance, so high-speed durability can be more effectively ensured while a reduction in cavity resonance can be envisaged.

According to the present invention, the predetermined sound-absorbing material of the at least one continuous ribbon is preferably selected from the group consisting of sponge, a foamed rubber composition, glass wool, rock wool, and cellulose fibre. These materials have excellent anti-vibration properties and sound suppression properties, so it is possible to envisage a reduction in cavity resonance.

According to the present invention, the thickness E of the at least one continuous ribbon is preferably between 50% and 200% of the width W of the at least one continuous ribbon.

According to the present invention constructed in this way, it is possible to envisage a more effective reduction in cavity resonance. That is to say, if the thickness E of the continuous ribbon is less than 50% of the width W of the continuous ribbon, the thickness E of the continuous ribbon does not have a sufficient height to impede propagation of sound waves from air vibration in the tyre cavity, so the degree of reduction in cavity resonance is reduced. On the other hand, if the thickness E of the continuous ribbon is greater than 200% of the width W of the continuous ribbon, the sound-suppression effect afforded by the continuous ribbon plateaus, and therefore this adversely affects the cost and weight of the tyre. Accordingly, if the thickness E of the continuous ribbon is set between 50% and 200% of the width W of the continuous ribbon it is possible to reduce cavity resonance more effectively.

According to the present invention, the groove width D of the continuous groove is preferably formed in such a way as to vary in a range between 10% and 250% of the width W of the at least one continuous ribbon in the direction in which the at least one continuous ribbon runs.

According to the present invention constructed in this way sound waves from the vibration of air introduced into the continuous groove permeate into/are reflected by the continuous ribbon in an irregular fashion, so it is possible to ensure high-speed durability and to maintain producibility more effectively while a reduction in cavity resonance can be envisaged.

### Advantage of the Invention

The pneumatic tyre according to the present invention makes it possible to maintain high-speed durability and producibility while reducing cavity resonance.

### Brief Description of the Figures

[Figure 1] is a schematic view in cross section in the radial direction of a pneumatic tyre provided with a noise damper according to a first mode of embodiment of the present invention.
[Figure 2] is a schematic view of the internal surface of a pneumatic tyre provided with a noise damper according to a first mode of embodiment of the present invention.
[Figure 3] is a schematic view of the internal surface of a pneumatic tyre provided with a noise damper according to a second mode of embodiment of the present invention.
[Figure 4] is a schematic view of the internal surface of a pneumatic tyre provided with a noise damper according to a third mode of embodiment of the present invention.
[Figure 5] is a schematic view of the internal surface of a pneumatic tyre provided with a noise damper according to a fourth mode of embodiment of the present invention.
[Figure 6] is a schematic view in cross section in the radial direction of a pneumatic tyre provided with a noise damper according to a fifth mode of embodiment of the present invention.
[Figure 7] is a schematic view in cross section in the radial direction of a pneumatic tyre provided with a noise damper according to a sixth mode of embodiment of the present invention.
[Figure 8] is a schematic view in cross section in the radial direction of a pneumatic tyre provided with a noise damper according to the prior art.

### Mode of Embodiment of the Invention

Preferred modes of embodiment of the present invention will be described below with reference to the figures.

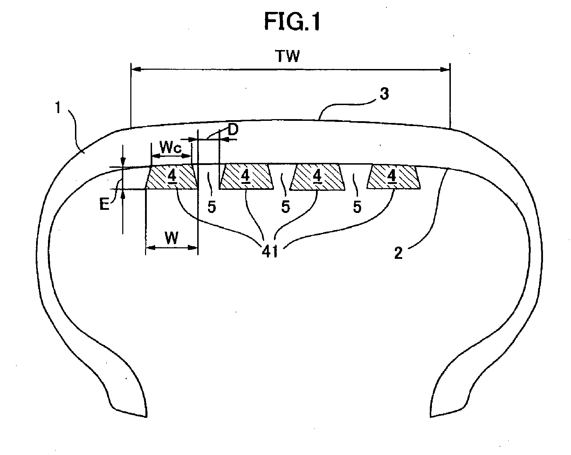

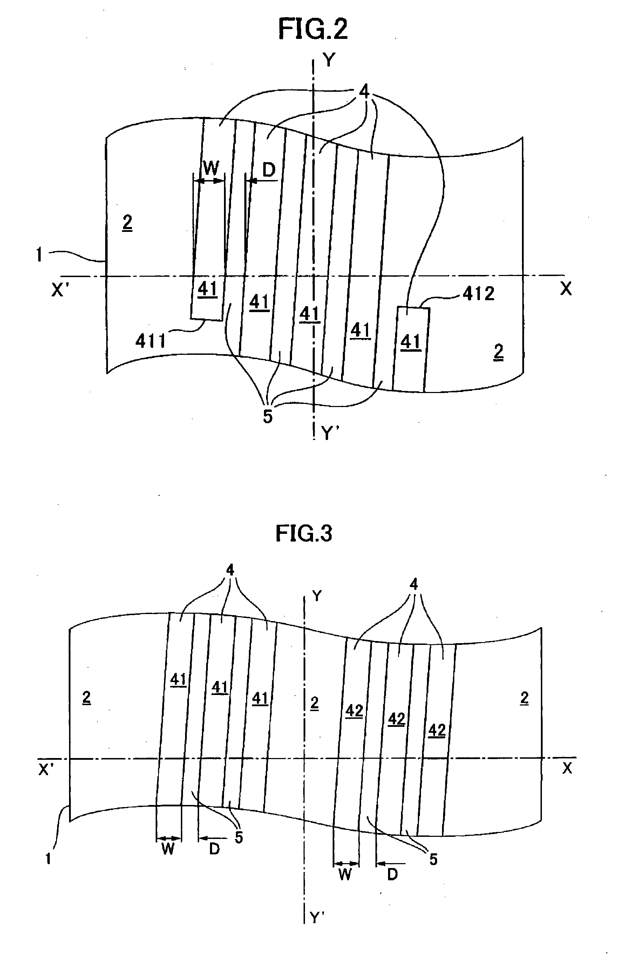

A pneumatic tyre according to a first mode of embodiment of the present invention will be described first of all with reference to figures 1 and 2.

Figure 1 is a schematic view in cross section in the radial direction of a pneumatic tyre provided with a noise damper according to a first mode of embodiment of the present invention, and figure 2 is a schematic view of the internal surface of a pneumatic tyre provided with a noise damper according to a first mode of embodiment of the present invention. In figure 2 the circumferential direction of the tyre is denoted by YY', and the axial direction of the tyre is denoted by XX'.

First of all, as shown in figure 1, the symbol 1 denotes a pneumatic tyre 1 which is provided with a noise damper 4 according to a first mode of embodiment of the present invention. The noise damper 4 serves to reduce cavity resonance, and as shown in figures 1 and 2, it consists of a continuous ribbon 41 having a continuous width W and thickness E, and is fitted to the internal surface 2 of the pneumatic tyre by a bottom surface having a width Wc which is affixed to the tyre internal surface. Here, "the tyre internal surface" (tyre internal surface 2) refers to the surface of the tyre facing the cavity, and in the normal state of usage of the tyre (a state in which the tyre is attached to a wheel) this surface cannot be seen from the outside.

The continuous ribbon 41 is formed by a single continuous ribbon 41 which is continuously attached to the tyre internal surface 2 running four times around said internal surface, in such a way as to be angled with respect to the circumferential direction of the tyre, in other words in such a way as to extend in an oblique direction with respect to the circumferential direction of the tyre. Continuous grooves 5 having a groove width D extending three times around the tyre are formed on the internal surface 2 thereof by means of adjacent continuous ribbons 41 and the tyre internal surface 2, as a result of a single continuous ribbon 41 being continuously attached four times around the tyre internal surface. The continuous grooves 5 formed in this way also extend in such a way as to be angled with respect to the circumferential direction of the tyre as shown in figure 2. That is to say, in this mode of embodiment, the continuous ribbon 41 is attached in such a way as to extend at a predetermined angle with respect to the circumferential direction of the tyre, and the continuous grooves 5 are formed by adjacent continuous ribbons 41 and the tyre internal surface 2.

Here, the width W of the continuous ribbon 41 is the maximum width projected onto the tyre internal surface 2, the thickness E is the maximum thickness in the radial direction of the tyre, the width Wc of the bottom surface of the continuous ribbon 41 which is affixed to the tyre internal surface is the width of a portion parallel to the tyre internal surface 2 of the attached continuous ribbon 41 affixed to the tyre internal surface 2 projected onto the tyre internal surface 2, and the width D of the continuous groove formed by the continuous ribbon 41 is the maximum gap between adjacent continuous ribbons 41 projected onto the tyre internal surface 2.

As shown in figure 1, the tyre 1 has a tread surface 3 having a width TW which comes into contact with the road surface during travel. It should be noted that the tyre size in this example is 225/55R16.

The width W of the continuous ribbon 41 is formed in such a way as to be between 5% and 25% of the width TW of the tread 3. In this mode of embodiment the width TW of the tread 3 is 168 mm and the width W of the continuous ribbon 41 is 24 mm.

The thickness E of the continuous ribbon 41 is formed in such a way as to be between 50% and 200% of the width W of the continuous ribbon 41. In this mode of embodiment the thickness E of the continuous ribbon 41 is 15 mm.

The width Wc of the bottom surface of the continuous ribbon 41 which is affixed to the tyre internal surface is formed in such a way as to be smaller than the width W of the continuous ribbon 41. Furthermore, the ratio of the width W of the continuous ribbon 41 to the width Wc of the bottom surface which is affixed to the tyre internal surface (Wc/W) is formed in such a way as to be at least equal to 1.2. In this mode of embodiment, the width Wc of the bottom surface of the continuous ribbon 41 which is affixed to the tyre internal surface is 18 mm, and the ratio of the width W of the continuous ribbon 41 to the width Wc of the bottom surface which is affixed to the tyre internal surface (Wc/W) is 1.3. It should be noted that the ratio of the width W of the continuous ribbon to the width Wc (W/Wc) is preferably no greater than 3.0 in order to fix the noise damper more securely during travel of the tyre.

The continuous ribbon 41 is made of a sound-absorbing material which has excellent anti-vibration properties and sound absorption properties. The continuous ribbon 41 is preferably a single continuous ribbon, but it is equally possible to form a single continuous ribbon by combining multiple short ribbons. The sound-absorbing material which forms the continuous ribbon 41 is preferably any one material selected from the group consisting of sponge, a foamed rubber composition, glass wool, rock wool, and cellulose fibre. The continuous ribbon 41 in this mode of embodiment is made of sponge.

The sponge may be moulded to a predetermined shape in advance outside the tyre and then introduced into the tyre cavity in order to form the continuous ribbon 41, or the continuous ribbon 41 may be formed while directly introducing (injecting), for example, the polyurethane-based material which forms the sponge into the tyre cavity. Furthermore, if the polyurethane-based material which forms the continuous ribbon 41 is directly introduced into the tyre cavity, there may be a difference in the growth rate of the material at the material surface and inside the material due to differences in the material temperature and ambient temperature during the process of forming the continuous ribbon 41, and a thin film-like portion may be formed at the material surface. The film-like portion which is present at the surface of this continuous ribbon 41 makes it possible to achieve an effect of preventing water from penetrating into the continuous ribbon 41 and improving the durability of the continuous ribbon 41.

The continuous ribbon 41 is fixed to the tyre internal surface 2 in such a way as to occupy a range of at least 30% of the range of the tyre internal surface 2 corresponding to the range where the tread 3 is formed on the inside in the radial direction of the tread 3. In this mode of embodiment, the continuous ribbon 41 is fixed to the tyre internal surface 2 in such a way as to occupy a range of 85% on the inside in the radial direction of the tread 3, in other words the continuous ribbon 41 is fixed to the tyre internal surface 2 in such a way as to cover 85% of the range of the tyre internal surface 2 corresponding to the tread 3.

The width D of the continuous groove 5 is formed in such a way as to be at least equal to 10% of the width W of the continuous ribbon 41. In this mode of embodiment, the width D of the continuous groove 5 is 13 mm.

The continuous ribbon 41 shown in the cross-sectional view in the radial direction in figure 1 is formed only by a single continuous ribbon 41, as described above; as shown in figure 2, this continuous ribbon 41 comprises two ends, namely a start end 411 and a terminal end 412, and these two ends are formed in such a way as to be offset from each other in the axial direction, in other words in such a way as to have a space therebetween. The amount of offset of the two ends 411, 412 in this mode of embodiment is 148 mm.

In this way, in this mode of embodiment, the continuous ribbon 41 attached to the tyre internal surface 2 comprises two ends, namely the start end 411 and the terminal end 412, as shown in figure 2, and these two ends 411, 412 are formed in such a way as to be offset from each other in the axial direction. The continuous ribbon 41 is provided on the tyre internal surface 2 in such a way that a single continuous ribbon 41 runs four times around the tyre, as described above, in other words it runs four times at a predetermined angle with respect to the circumferential direction of the tyre, and as a result the continuous grooves 5 are formed running three times around the tyre by adjacent continuous ribbons 41 and the tyre internal surface 2.

It should be noted that in this mode of embodiment, the start end 411 and terminal end 412 are provided at positions which are offset on the axis of the tyre internal surface 2 as a result of the continuous ribbon 41 running four times around the circumferential direction of the tyre, as shown in figure 2, but if the continuous ribbon 41 runs three times around the circumferential direction of the tyre, for example, the continuous ribbon 41 may be provided in such a way that the start end 411 and terminal end 412 are provided at positions which are offset with respect to the circumferential direction of the tyre and the start end 411 and terminal end 412 are offset in the axial direction at different positions on the axis of the tyre internal surface 2.

It should be noted that in the example of the tyre according to this mode of embodiment, the cross-sectional shape of the continuous ribbon 41 is a trapezoidal shape in which the upper base forms the bottom surface, but this cross-sectional shape is not limited to a trapezoidal shape in which the upper base forms the bottom surface. The cross-sectional shape of the continuous ribbon 41 should be a cross-sectional shape in which the width Wc of the bottom surface which forms the continuous groove 5 and is affixed to the tyre internal surface can be made smaller than the width W of the continuous ribbon 41, and said shape may be appropriately modified to a cross-sectional shape in which the external shape outside the bottom surface which is affixed to the tyre internal surface is arched or a shape in which the side surfaces or upper surface are expanded in the form of a curve, among others. It should be noted that when such shapes are adopted, the width W of the continuous ribbon 41 is the maximum width projected onto the tyre internal surface 2, the thickness E is the maximum thickness in the radial direction of the tyre, the width Wc of the bottom surface of the continuous ribbon which is affixed to the tyre internal surface is the width of a portion parallel to the tyre internal surface 2 of the attached continuous ribbon affixed to the tyre internal surface 2 projected onto the tyre internal surface 2, and the width D of the continuous groove formed by the continuous ribbon is the maximum gap between adjacent continuous ribbons projected onto the tyre internal surface 2.

Furthermore, the continuous ribbon may be formed in such a way as to meander at a predetermined angle with respect to the circumferential direction of the tyre in such a way as to form the continuous grooves. In this case, the width D of the continuous grooves may vary continuously in the direction of extension of the continuous ribbon, or the meandering shape of adjacent continuous ribbons may be arranged in such a way that the width D of the continuous grooves is constant.

The main action and effects of the pneumatic tyre provided with a noise damper according to this mode of embodiment will be described next.

The continuous ribbon 41 is first of all formed in such a way as to be angled with respect to the circumferential direction of the tyre in order to prevent propagation of sound waves from cavity resonance which progress in the circumferential direction of the tyre, and therefore cavity resonance can be effectively reduced.

Here, cavity resonance is generated because air enclosed in the annular cavity acts as an air column as the tyre travels, and this cavity resonance is a cause of air vibration whereby the inside of the air column mainly spreads in the circumferential direction of the tyre. The continuous ribbon 41 is therefore disposed in such a way as to extend obliquely at a predetermined angle with respect to the circumferential direction of the tyre, whereby it is possible to effectively reduce cavity resonance.

Furthermore, as described above, the continuous grooves 5 are formed in such a way as to extend at a predetermined angle with respect to the circumferential direction of the tyre, and therefore the energy of air vibration which propagates mainly in the circumferential direction of the tyre from cavity resonance conducted into the continuous grooves 5 is divided into a component which permeates into the continuous ribbon 41, and a component which is reflected by the surface of the continuous ribbon 41. The energy component which permeates into the continuous ribbon 41 is attenuated by the effect of the sound-absorbing material which forms the continuous ribbon 41, and the component which is reflected by the surface of the continuous ribbon 41 is not only attenuated by reflection thereof, the energy thereof also reaches other sections of the continuous ribbon 41 whereby the abovementioned permeation/reflection phenomena are repeated, so cavity resonance can be more effectively reduced.

In addition, according to this mode of embodiment, the groove width D of the continuous groove 5 is at least equal to 10% of the width W of the continuous ribbon, so the area over which the tyre internal surface comes into direct contact with air in the tyre cavity by way of the continuous groove can be made a sufficient area to radiate heat. In addition, the width Wc of the bottom surface of the continuous ribbon 41 which is affixed to the tyre internal surface is smaller than the width W of the continuous ribbon 41, so it is possible to further increase the surface area over which the tyre internal surface comes into direct contact with air in the tyre cavity by way of the continuous grooves, in order to radiate heat. This means that the heat mainly generated in the tread while the tyre is travelling can be reliably released from the tyre internal surface to the tyre cavity even though the continuous ribbon 41 constituting the noise damper 4 is provided running multiple times (four times in this mode of embodiment) around the inside of the tread 3 in the radial direction thereof, and as a result it is possible to maintain high-speed durability.

In addition, the structure in this mode of embodiment is such that a single continuous ribbon 41 is fixed in the tyre cavity running four times around the tyre in such a way as to extend obliquely with respect to the circumferential direction of the tyre, and therefore a fixing method may be adopted in which, for example, the start end 411 of the continuous ribbon 41 is fixed to the tyre internal surface, after which the continuous ribbon 41 should continue to be fixed up to the terminal end 412 thereof while the tyre 1 is rotated about the axis of rotation thereof and the continuous ribbon 41 or the tyre 1 itself is moved in the axial direction. In this way, the tyre 1 provided with the noise damper 4 according to this mode of embodiment enables the continuous ribbon 41 to be attached with relative ease, and the producibility of the tyre 1 provided with the continuous ribbon 41 constituting the noise damper 4 can be maintained.

In addition, according to this mode of embodiment, the width W of the continuous ribbon 41 is formed in such a way as to be between 5% and 25% of the width TW of the tread 3. Here, if the width W of the continuous ribbon is less than 5% of the width TW of the tread 3, the width W of the continuous ribbon 41 is excessively small, and it is necessary to increase the number of turns of the continuous ribbon in order to effectively reduce cavity resonance, and producibility is reduced. On the other hand, if the width W of the continuous ribbon 41 is more than 25% of the tread width TW, the proportion of the tyre internal surface 2 occupied by the continuous ribbon increases, and as a result the proportion of the tyre internal surface 2 which comes into contact with air in the tyre cavity is reduced, so the high-speed durability is reduced. Accordingly, if the width W of the continuous ribbon 41 is set between 5% and 25% of the tread width TW, it is possible to ensure high-speed durability and to maintain producibility while a reduction in cavity resonance can be envisaged.

In addition, according to this mode of embodiment, the thickness E of the continuous ribbon 41 is formed in such a way as to be between 50% and 200% of the width W of the continuous ribbon 41. Here, if the thickness E of the continuous ribbon 41 is less than 50% of the width W of the continuous ribbon 41, the thickness E of the continuous ribbon 41 does not have a sufficient height to impede propagation of sound waves from air vibration in the tyre cavity, so the degree of reduction in cavity resonance is reduced. On the other hand, if the thickness E of the continuous ribbon 41 is greater than 200% of the width W of the continuous ribbon 41, the sound-suppression effect afforded by the continuous ribbon 41 plateaus, and therefore this adversely affects the cost and weight of the tyre. Accordingly, if the thickness E of the continuous ribbon 41 is set between 50% and 200% of the width W of the continuous ribbon 41 it is possible to reduce cavity resonance more effectively, and it is possible to suppress increases in the cost and weight.

A pneumatic tyre according to a second mode of embodiment of the present invention will be described next with the aid of figure 3.

Figure 3 is a schematic view of the internal surface of a pneumatic tyre provided with a noise damper according to a second mode of embodiment of the present invention. It should be noted that the basic structure and effects of the second mode of embodiment are the same as those of the first mode of embodiment described above, and therefore the description given here will mainly relate to the structure and effects which differ from those of the first mode of embodiment and the structure and effects which are the same as in the first mode of embodiment will not be described again.

As shown in figure 3, according to the second mode of embodiment, two continuous ribbons 41, 42 are attached in such a way as to each run three times around the internal surface 2 of the pneumatic tyre 1. The two continuous ribbons 41, 42 are both inclined in the same direction with respect to the circumferential direction of the tyre, and continuous grooves 5 which are the same as those of the first mode of embodiment are formed by each. The continuous grooves 5 which are formed by the two continuous ribbons 41, 42 and the tyre internal surface 2 are formed in such a way as to have the same width D.

The second mode of embodiment makes it possible to increase the degree of freedom in the position where the continuous ribbon 41 is attached to the tyre internal surface 2, and the most effective place for attenuating cavity resonance can be selected as the place of attachment.

It should be noted that the inclinations of the two continuous ribbons 41 with respect to the circumferential direction of the tyre may also be different, and the width D of the continuous grooves 5 may also differ for each continuous ribbon 41.

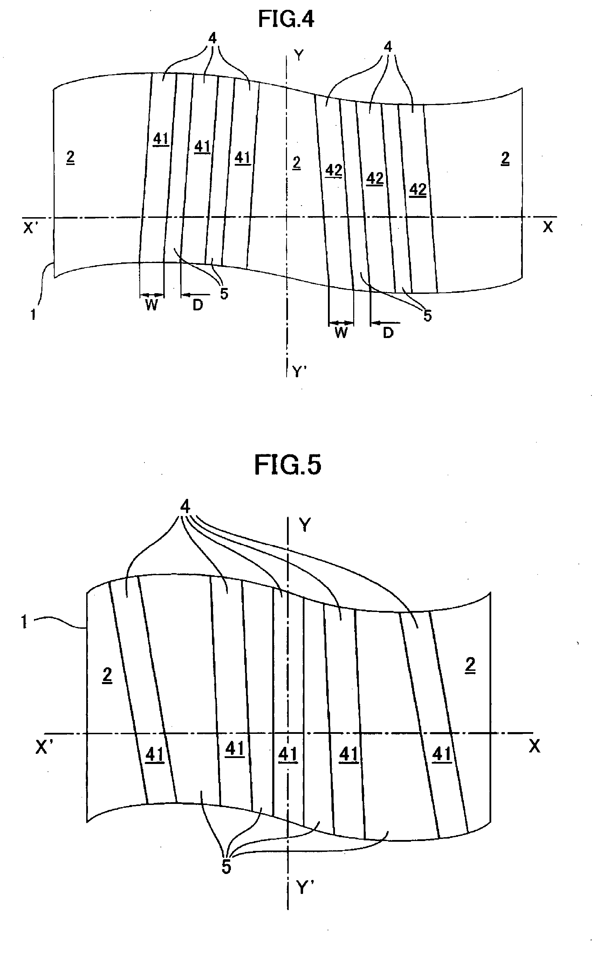

A pneumatic tyre according to a third mode of embodiment of the present invention will be described next with the aid of figure 4.

Figure 4 is a schematic view of the internal surface of a pneumatic tyre provided with a noise damper according to a third mode of embodiment of the present invention. It should be noted that the basic structure and effects of the third mode of embodiment are the same as those of the first mode of embodiment described above, and therefore the description given here will mainly relate to the structure and effects which differ from those of the first mode of embodiment and the structure and effects which are the same as in the first mode of embodiment will not be described again.

As shown in figure 4, according to the third mode of embodiment, two continuous ribbons 41, 42 are attached in such a way as to each run three times around the internal surface 2 of the pneumatic tyre 1. According to the third mode of embodiment, the first continuous ribbon 41 is attached in such a way as to extend in an oblique direction with respect to the circumferential direction of the tyre about the axis of rotation thereof in the same way as in the first mode of embodiment, and the second continuous ribbon 42 is attached in such a way as to extend in a direction about the axis of rotation which is symmetrical, with respect to the circumferential direction of the tyre, to the direction in which the first continuous ribbon 41 extends. Both of the continuous ribbons 41, 42 also form continuous grooves 5 together with the tyre internal surface 2, in the same way as in the first mode of embodiment, and the continuous grooves 5 which are formed by the continuous ribbons 41, 42 and the tyre internal surface 2 have the same width D.

The third mode of embodiment makes it possible to increase the degree of freedom in the position where the continuous ribbon 41 is attached to the tyre internal surface 2, and the most effective place for attenuating cavity resonance can be selected as the place of attachment.

It should be noted that the inclinations of the two continuous ribbons 41 may also be different, and the width D of the continuous grooves 5 may also differ for each continuous ribbon 41.

A pneumatic tyre according to a fourth mode of embodiment of the present invention will be described next with the aid of figure 5.

Figure 5 is a schematic view of the internal surface of a pneumatic tyre provided with a noise damper according to a fourth mode of embodiment of the present invention. It should be noted that the basic structure and effects of the fourth mode of embodiment are the same as those of the first mode of embodiment described above, and therefore the description given here will mainly relate to the structure and effects which differ from those of the first mode of embodiment and the structure and effects which are the same as in the first mode of embodiment will not be described again.

As shown in figure 5, according to the fourth mode of embodiment, one continuous ribbon 41 is attached in such a way as to run five times around the internal surface 2 of the pneumatic tyre 1, and the groove width D of the continuous grooves 5 formed by the continuous ribbon 41 and the tyre internal surface 2 of the tyre is formed in such a way as to vary over each circuit. According to the fourth mode of embodiment, the groove width D of the continuous grooves 5 varies between 15 mm and 54 mm. It should be noted that the groove width D of the continuous grooves 5 may vary continuously in the direction in which the continuous ribbon 41 extends.

According to the fourth mode of embodiment, the width D of the continuous grooves 5 is variable, and as a result it is possible to reduce cavity resonance more effectively. That is to say, the energy of air vibration from cavity resonance conducted into the continuous grooves 5 permeates into the continuous ribbon 41 in an irregular manner within the continuous grooves 5, or is repeatedly reflected by the surface of the continuous ribbon 41, and as a result cavity resonance can be more effectively improved.

It should be noted that in this mode of embodiment, the groove width D of the continuous grooves 5 is made to vary for each circuit in the direction of attachment of the continuous ribbon 41, but the groove width D of the continuous grooves 5 may be made to vary by attaching the continuous ribbon 41 to the tyre internal surface 2 in such a way as to form a zigzag or a meander, for example, or the width W of the continuous ribbon 41 may be variable, or the variation may be achieved by means of another method (not depicted).

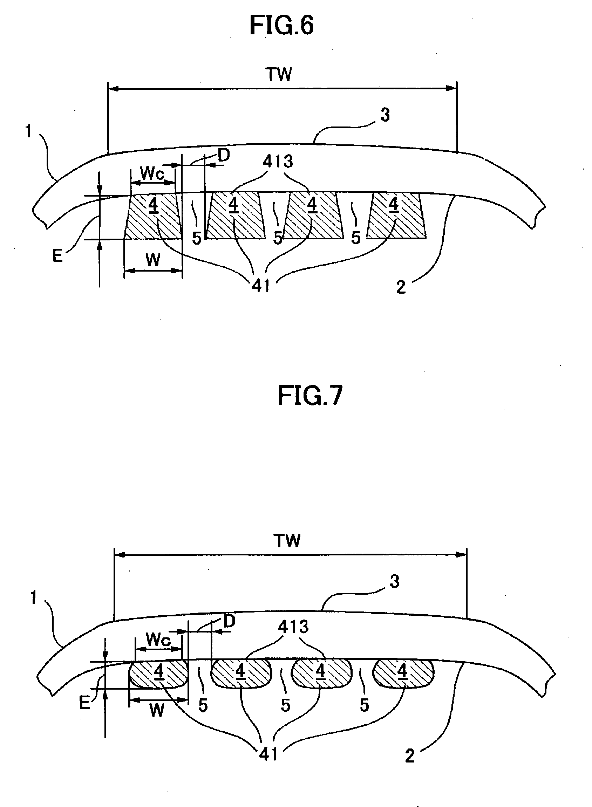

A pneumatic tyre according to a fifth mode of embodiment of the present invention will be described next with the aid of figure 6.

Figure 6 is a schematic view in cross section in the radial direction of a pneumatic tyre provided with a noise damper according to a fifth mode of embodiment of the present invention. It should be noted that the basic structure and effects of the fifth mode of embodiment are the same as those of the first mode of embodiment described above, and therefore the description given here will mainly relate to the structure and effects which differ from those of the first mode of embodiment and the structure and effects which are the same as in the first mode of embodiment will not be described again.

As shown in figure 6, a single continuous ribbon 41 having a thickness E which is between 50% and 200% of the width W, in which the cross-sectional shape is trapezoidal with the upper base forming the bottom surface, is attached in such a way that the start end and terminal end are offset in the axial direction, and runs four times around the tyre internal surface 2 about the axis of rotation of the tyre, and the same continuous grooves 5 are formed as in the first mode of embodiment. In the fifth mode of embodiment, the width W of the continuous ribbon 41 is 24 mm, the thickness E is 25 mm, which is 104% of the width W, the width Wc of the bottom surface is 18 mm, and the groove width D of the continuous grooves 5 is 15 mm.

In the fifth mode of embodiment, the thickness E of the continuous ribbon 41 is relatively thicker than it is in the first mode of embodiment, lying in the range of between 50% and 200% of the width W, and therefore it is possible to increase the surface area of the continuous ribbon 41 which is in contact with the tyre cavity in a range such that there is no adverse effect in terms of increasing the cost and weight, while a sufficient height can be maintained for the thickness E of the continuous ribbon 41 in order to avoid propagation of sound waves from air vibration in the tyre cavity. This means that air vibration which permeates into the continuous ribbon 41 or is reflected by the surface of the continuous ribbon 41 is increased and it is possible to more effectively avoid propagation of sound waves, and as a result cavity resonance can be more effectively improved.

A pneumatic tyre according to a sixth mode of embodiment of the present invention will be described next with the aid of figure 7.

Figure 7 is a schematic view in cross section in the radial direction of a pneumatic tyre provided with a noise damper according to a sixth mode of embodiment of the present invention. It should be noted that the basic structure and effects of the sixth mode of embodiment are the same as those of the first mode of embodiment described above, and therefore the description given here will mainly relate to the structure and effects which differ from those of the first mode of embodiment and the structure and effects which are the same as in the first mode of embodiment will not be described again.

As shown in figure 7, according to the sixth mode of embodiment, a single continuous ribbon 41 which is formed in such a way that the cross-sectional shape thereof is arched (for example the "semicircular" cross-sectional shape shown in the figure) and the ratio of the width W thereof with respect to the width Wc of the bottom surface which is affixed to the tyre internal surface (W/Wc) is at least equal to 1.2, is attached in such a way that the start end and terminal end are offset in the axial direction, and runs four times around the tyre internal surface 2 about the axis of rotation of the tyre, and the same continuous grooves 5 as in the first mode of embodiment are formed. According to the sixth mode of embodiment, the width W of the continuous ribbon 41 is 24 mm, the thickness E is 15 mm, the width Wc of the bottom surface is 18 mm, and the groove width D of the continuous grooves 5 is 15 mm.

According to the sixth mode of embodiment, the cross-sectional shape of the continuous ribbon 41 is arched as described above, and therefore the area over which the tyre internal surface comes into direct contact with the air in the tyre cavity by way of the continuous groove increases so heat radiation is ensured, while at the same time the centre of gravity of the continuous ribbon 41 can be brought closer to the tyre internal surface 2 than a trapezoidal continuous ribbon in which the upper base forms the bottom surface as described above. It is therefore possible to reduce the stress exerted on the bottom surface which is affixed to the tyre internal surface when the continuous ribbon 41 is subjected to force due to deformation of the tyre, and as a result it is possible to more effectively improve the high-speed durability.

Especially preferred modes of embodiment of the present invention have been described above, but the present invention is not limited to the modes of embodiment shown in the figures, and a number of variations may be implemented.

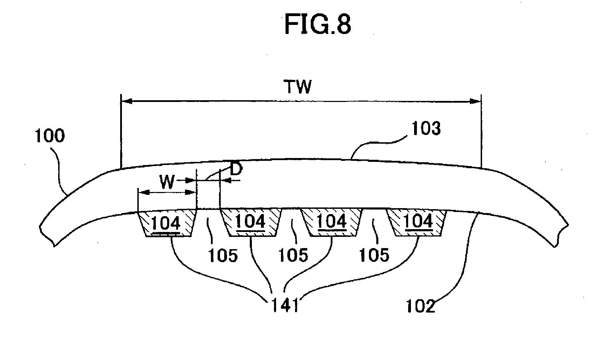

Figure 8 is a schematic view in cross section in the radial direction of a pneumatic tyre provided with a noise damper according to the prior art. The size of the tyre shown in figure 8 is the same as that of the pneumatic tyre 1 according to the first mode of embodiment. A ribbon 141 formed by a noise damper 104 for reducing cavity resonance is attached to the internal surface 102 of a pneumatic tyre 100 according to the prior art. The ribbon 141 continues four times around the circumferential direction of the tyre in such a way as to form continuous grooves 105, and the two ends thereof are attached in such a way as to be offset. The cross-sectional shape of the continuous ribbon 141 is a trapezoidal shape in which the lower base forms the bottom surface which is affixed to the tyre internal surface 102, and the width of the bottom surface is the same as the maximum width W of the continuous ribbon 141. It should be noted that in figure 8 the width of the ribbon at 141 is 24 mm and the thickness is 15 mm.

### Exemplary Embodiment

In order to clarify the advantage of the present invention, pneumatic tyres according to a conventional example which was not provided with a noise damper, a comparative example in which a noise damper was provided, and Exemplary Embodiment 1 in accordance with the present invention (first mode of embodiment) will be described with regard to results which were investigated using a simulation (finite element method) employing commercially-available computer software.

The tyre size used for the tyre models according to the conventional example, comparative example and Exemplary Embodiment 1 was 225/55R16, the wheel size was 7.0 J×16, the internal pressure was set at 230 kPa, and the load was set at 542 daN, in all cases. It should be noted that the comparative example employed a tyre model corresponding to that shown in figure 8, and was set in such a way that the cross-sectional area of the ribbon 43 was the same as that of the continuous ribbon 41 in the model according to Exemplary Embodiment 1, and the material used was the same as that used for the continuous ribbon 41.

The noise levels of the abovementioned tyre models were simulated by using a point sound source in the tyre cavity, with the abovementioned rim, internal pressure and load. The calculated noise was displayed as an index of the acoustic pressure level with respect to a conventional example, using the acoustic pressure level imparted from filter A in a frequency band between 190 and 230 Hz which includes a primary peak of cavity resonance. The higher the numerical value the better the result.

Furthermore, the maximum temperature in the range of the inside in the radial direction corresponding to the tread in the vicinity of the tyre internal surface when said tyres were rotated at 80 km/h using the abovementioned rim, internal pressure and load was simulated for the abovementioned tyre models. The maximum temperature calculated was displayed as an index with respect to a conventional example. The higher the numerical value the better the result.

**[Table 1]**

| | Exemplary Embodiment 1 | Conventional Example | Comparative Example |
|---|---|---|---|
| Noise performance (index) | 110 | 100 | 110 |
| Heat radiation performance (index) | 99 | 100 | 97 |

As shown in Table 1, it was possible to confirm that cavity resonance could be effectively reduced in the pneumatic tyre according to Exemplary Embodiment 1, and the configuration of the pneumatic tyres in the first to sixth modes of embodiment described above also made it possible to maintain high-speed durability, and producibility could also be ensured.

### Key to Symbols

- 1: Pneumatic tyre
- 2: Tyre internal surface
- 3: Tread
- 4: Noise damper
- 41: Continuous ribbon formed by suppressor
- 411: Start end of continuous ribbon
- 412: Terminal end of continuous ribbon
- 413: Bottom surface of continuous ribbon affixed to tyre internal surface
- 5: Continuous groove

## Claims

1. Pneumatic tyre (1) comprising a tread (3), a cavity enclosed by a tyre internal surface (2), and a noise damper (4) for reducing cavity resonance in said cavity, the noise damper (4) is at least one continuous ribbon (41) which is formed by a predetermined sound-absorbing material and has a width W and thickness E, and a bottom surface (413) affixed to the tyre internal surface (2) over a width Wc, which is fixed to the tyre internal surface (2) in such a way as to cover a range of at least 30% of the inside of the tyre in the radial direction corresponding to the tread (3) on the tyre internal surface (2);
the at least one continuous ribbon (41) is disposed in such a way as to run at least once around the tyre internal surface (2) about the axis of rotation thereof, and in such a way that the start end (411) and terminal end (412) of the at least one continuous ribbon (41) are offset from each other in the direction of the axis of rotation of the tyre (1), and as a result a continuous groove (5) having a groove width D which is at least equal to 10% of the width W of the at least one continuous ribbon (41) is formed by the adjacent portions of the at least one continuous ribbon (41) and the tyre internal surface (2),
said pneumatic tyre (1) being **characterized in that** the width Wc of the bottom surface (413) of the continuous ribbon (41) is smaller than the width W of the continuous ribbon (41).

2. Pneumatic tyre (1) according to Claim 1, in which the ratio of the width W of the at least one continuous ribbon (41) to the width Wc of the bottom surface (413) (W/Wc) is at least equal to 1.2.

3. Pneumatic tyre (1) according to Claim 1 or 2, in which the tread (3) has a width TW, and the width W of the at least one continuous ribbon (41) is between 5% and 25% of the width TW of the tread (3).

4. Pneumatic tyre (1) according to any one of Claims 1 to 3, in which the at least one continuous ribbon (41) is disposed in such a way as to run at least twice around the tyre internal surface (2).

5. Pneumatic tyre (1) according to any one of Claims 1 to 4, in which there are two of the abovementioned at least one continuous ribbon (41, 42), and the continuous groove (5) is formed for each of the two continuous ribbons (41, 42) by the continuous ribbons (41, 42) and the tyre internal surface (2).

6. Pneumatic tyre (1) according to any one of Claims 1 to 5, in which there are two of the abovementioned at least one continuous ribbon (41, 42), namely a first continuous ribbon (41) extending in a predetermined angular direction with respect to the circumferential direction of the tyre about the axis of rotation of the tyre, and a second continuous ribbon (42) extending in a direction which is symmetrical, with respect to the circumferential direction of the tyre, to the predetermined angular direction along which the first continuous ribbon runs.

7. Pneumatic tyre (1) according to any one of Claims 1 to 6, in which the predetermined sound-absorbing material of the at least one continuous ribbon (41) is selected from the group consisting of sponge, a foamed rubber composition, glass wool, rock wool, and cellulose fibre.

8. Pneumatic tyre (1) according to any one of Claims 1 to 7, in which the thickness E of the at least one continuous ribbon (41) is between 50% and 200% of the width W of the at least one continuous ribbon (41).

9. Pneumatic tyre (1) according to any one of Claims 1 to 8, in which the groove width D of the continuous groove (5) is formed in such a way as to vary in a range between 10% and 250% of the width W of the at least one continuous ribbon (41) in the direction in which the at least one continuous ribbon (41) runs.

## Patentansprüche

1. Luftreifen (1), welcher ein Profil (3), einen Hohlraum, welcher von einer inneren Reifenoberfläche (2) eingeschlossen ist, und einen Schalldämpfer (4) zum Reduzieren einer Hohlraumresonanz in dem Hohlraum umfasst, wobei der Schalldämpfer (4) mindestens ein durchgehender Strang (41) ist, welcher aus einem vorbestimmten Schall absorbierenden Material ausgebildet ist und eine Breite W und eine Dicke E aufweist, sowie eine untere Oberfläche (413), welche an der inneren Reifenoberfläche (2) über eine Breite Wc fixiert ist und in einer derartigen Weise an der inneren Reifenoberfläche (2) befestigt ist, dass ein Bereich von mindestens 30 % des Reifeninneren in der radialen Richtung entsprechend des Profils (3) auf der inneren Reifenoberfläche (2) abgedeckt ist;
der mindestens eine durchgehende Strang (41) ist auf eine derartige Weise angeordnet, dass er mindestens einmal um die innere Reifenoberfläche (2) um die Achse ihrer Drehbewegung herum läuft, und er ist auf eine derartige Weise angeordnet, dass der Anfang (411) und das Ende (412) des mindestens einen durchgehenden Strangs (41) in der Richtung der Drehachse des Reifens (1) zueinander versetzt sind und im Ergebnis eine durchgehende Rille (5) mit einer Rillenbreite D, welche mindestens gleich 10 % der Breite W des mindestens einen durchgehenden Strangs (41) beträgt, durch die benachbarten Abschnitte des mindestens einen durchgehenden Strangs (41) und die innere Reifenoberfläche (2) ausgebildet wird,
wobei der Luftreifen (1) **dadurch gekennzeichnet ist, dass** die Breite Wc der unteren Oberfläche (413) des durchgehenden Strangs (41) kleiner ist als die Breite W des durchgehenden Strangs (41).

2. Luftreifen (1) nach Anspruch 1, wobei das Verhältnis der Breite W des mindestens einen durchgehenden Strangs (41) zu der Breite Wc der unteren Oberfläche (413) (W/Wc) mindestens gleich 1,2 ist.

3. Luftreifen (1) nach Anspruch 1 oder 2, wobei das Profil (3) eine Breite TW aufweist und die Breite W des mindestens einen durchgehenden Strangs (41) zwischen 5 % und 25 % der Breite TW des Profils (3) beträgt.

4. Luftreifen (1) nach einem der Ansprüche 1 bis 3, wobei der mindestens eine durchgehende Strang (41) in einer derartigen Weise angeordnet ist, dass er mindestens zweimal um die innere Reifenoberfläche (2) herum läuft.

5. Luftreifen (1) nach einem der Ansprüche 1 bis 4, wobei es zwei von dem obenstehend beschriebenen mindestens einen durchgehenden Strang (41, 42) gibt und die durchgehende Rille (5) für jeden der beiden durchgehenden Stränge (41, 42) durch die durchgehenden Stränge (41, 42) und die innere Reifenoberfläche (2) ausgebildet wird.

6. Luftreifen (1) nach einem der Ansprüche 1 bis 5, wobei es zwei von dem obenstehend beschriebenen mindestens einen durchgehenden Strang (41, 42) gibt, namentlich einen ersten durchgehenden Strang (41), welcher sich in einer vorgegebenen Winkelrichtung hinsichtlich der peripheren Richtung des Reifens um die Achse der Drehbewegung des Reifens erstreckt, und einen zweiten durchgehenden Strang (42), welcher sich in einer Richtung erstreckt, welche hinsichtlich der peripheren Richtung des Reifens zu der vorgegebenen Winkelrichtung symmetrisch ist, entlang welcher der erste durchgehende Strang läuft.

7. Luftreifen (1) nach einem der Ansprüche 1 bis 6, wobei das vorgegebene Schall absorbierende Material des mindestens einen durchgehenden Strangs (41) aus der Gruppe ausgewählt ist, welche aus Schwamm, einer geschäumten Gummizusammensetzung, Glaswolle, Steinwolle und Cellulose-Faser besteht.

8. Luftreifen (1) nach einem der Ansprüche 1 bis 7, wobei die Dicke E des mindestens einen durchgehenden Strangs (41) zwischen 50 % und 200 % der Breite W des mindestens einen durchgehenden Strangs (41) beträgt.

9. Luftreifen (1) nach einem der Ansprüche 1 bis 8, wobei die Rillenbreite D der durchgehenden Rille (5) in einer derartigen Weise ausgebildet ist, dass sie in einem Bereich zwischen 10 % und 250 % der Breite W des mindestens einen durchgehenden Strangs (41) in der Richtung variiert, in welcher der mindestens eine durchgehende Strang (41) läuft.

## Revendications

1. Pneumatique (1) comprenant une bande de roulement (3), une cavité entourée par une surface interne de pneu (2), et un amortisseur de bruit (4) pour réduire la résonance de cavité dans ladite cavité, l'amortisseur de bruit (4) étant au moins un ruban continu (41) qui est formé par un matériau prédéterminé absorbant le son et qui présente une largeur W et une épaisseur E, et une surface inférieure (413) fixée à la surface interne du pneu (2) sur une largeur Wc, qui est fixée à la surface interne du pneu (2) de manière à couvrir au moins 30 % de l'intérieur du pneu dans la direction radiale correspondant à la bande de roulement (3) sur la surface interne du pneu (2) ; l'au moins un ruban continu (41) étant disposé de manière à s'étendre au moins une fois autour de la surface interne du pneu (2) autour de l'axe de rotation de celui-ci, et de manière à ce que l'extrémité avant (411) et l'extrémité arrière (412) de l'au moins un ruban continu (41) soient décalées l'une de l'autre dans la direction de l'axe de rotation du pneu (1), et qu'en conséquence une gorge continue (5) ayant une largeur de gorge D qui est au moins égal à 10 % de la largeur W de l'au moins un ruban continu (41) soit formée par les portions adjacentes de l'au moins un ruban continu (41) et de la surface interne du pneu (2),
ledit pneumatique (1) étant **caractérisé en ce que** la largeur Wc de la surface inférieure (413) du ruban continu (41) est inférieure à la largeur W du ruban continu (41).

2. Pneumatique (1) selon la revendication 1, dans lequel le rapport de la largeur W de l'au moins un ruban continu (41) à la largeur Wc de la surface inférieure (413) (W/Wc) est au moins égal à 1,2.

3. Pneumatique (1) selon la revendication 1 ou 2, dans lequel la bande de roulement (3) présente une largeur TW, et la largeur W de l'au moins un ruban continu (41) est comprise entre 5 % et 25 % de la largeur TW de la bande de roulement (3).

4. Pneumatique (1) selon l'une quelconque des revendications 1 à 3, dans lequel l'au moins un ruban continu (41) est disposé de manière à s'étendre au moins deux fois autour de la surface interne du pneu (2).

5. Pneumatique (1) selon l'une quelconque des revendications 1 à 4, dans lequel il est prévu deux de l'au moins un ruban continu susmentionné (41, 42), et la gorge continue (5) est formée, pour chacun des deux rubans continus (41, 42), par les rubans continus (41, 42) et la surface interne du pneu (2).

6. Pneumatique (1) selon l'une quelconque des revendications 1 à 5, dans lequel il est prévu deux de l'au moins un ruban continu susmentionné (41, 42), à savoir un premier ruban continu (41) s'étendant dans une direction angulaire prédéterminée par rapport à la direction circonférentielle du pneu autour de l'axe de rotation du pneu, et un deuxième ruban continu (42) s'étendant dans une direction qui est symétrique, par rapport à la direction circonférentielle du pneu, à la direction angulaire prédéterminée le long de laquelle s'étend le premier ruban continu.

7. Pneumatique (1) selon l'une quelconque des revendications 1 à 6, dans lequel le matériau absorbant le son prédéterminé de l'au moins un ruban continu (41) est choisi parmi le groupe constitué d'éponge, d'une composition de caoutchouc mousse, de laine de verre, de laine de roche, et de fibre de cellulose.

8. Pneumatique (1) selon l'une quelconque des revendications 1 à 7, dans lequel l'épaisseur E de l'au moins un ruban continu (41) est comprise entre 50 % et 200 % de la largeur W de l'au moins un ruban continu (41).

9. Pneumatique (1) selon l'une quelconque des revendications 1 à 8, dans lequel la largeur de gorge D de la gorge continue (5) est formée de manière à varier dans une plage comprise entre 10 % et 250 % de la largeur W de l'au moins un ruban continu (41) dans la direction dans laquelle s'étend l'au moins un ruban continu (41).
